# EUROPÄISCHE PATENTSCHRIFT

(11) **EP 1 199 506 B1**
(45) Veröffentlichungstag und Bekanntmachung des Hinweises auf die Patenterteilung: **29.09.2004**
(21) Anmeldenummer: 01124284.9
(22) Anmeldetag: 18.10.2001
(51) Int. Cl.: F16L 37/084

(54) **Anschlussvorrichtung für Druckrohre**
Connecting device for pressure pipes
Dispositif de raccordement pour tuyaux de pression

(30) Priorität: 19.10.2000 DE 20017921 U
(43) Veröffentlichungstag der Anmeldung: 24.04.2002
(73) Patentinhaber: Voss Automotive GmbH, 51688 Wipperfürth (DE)
(72) Erfinder: Salomon-Bahls, Bernd, 58553 Halver (DE)
(74) Vertreter: Patentanwälte Dr. Solf & Zapf

(56) Entgegenhaltungen:
- EP-A- 0 160 559
- EP-A- 0 610 538
- EP-A- 1 020 677
- DE-U- 29 807 763
- FR-A- 2 758 379
- GB-A- 625 022
- US-A- 5 911 443

## Beschreibung

Nach dem Oberbegriff des Anspruchs 1 betrifft die vorliegende Erfindung eine Anschlußvorrichtung für Druckmittel-Rohre, mit einem hülsenartigen, kraft- und/oder formschlüssig in eine Anschlußöffnung eines Anschlußkörpers (z.B. beliebiges Aggregate- oder Gehäuseteil) einsetzbaren und eine Aufnahmeöffnung für ein einzusteckendes Rohr umschließenden Einsatzteil, einem Dichtelement zur Abdichtung zwischen dem Anschlußkörper und dem Rohr, einem federelastischen, im wesentlichen ringförmigen Halteelement mit sich radial nach innen in die Aufnahmeöffnung erstreckenden, über den Umfang verteilten und widerhakenartig gegen den Außenumfang des Rohres wirkenden Haltearmen sowie insbesondere mit einer derart verschiebbar in das Einsatzteil eingreifenden Lösehülse, dass durch Einschieben der Lösehülse das Halteelement zur Freigabe des Rohres elastisch verformbar ist.

Eine solche Vorrichtung ist aus der US-A-5 911 443 bekannt.

Ferner ist eine ähnliche Vorrichtung aus der EP 0 616 161 B1 bekannt. Dabei ist das Halteelement als Zahnring mit einer Vielzahl von radialen, zahnartigen Halteärmchen ausgebildet, die über periphere Verbindungsabschnitte miteinander verbunden sind. Bei dieser bekannten Ausführung soll vorgesehen sein, dass jeder periphere Verbindungsabschnitt in einer innerhalb des Einsatzteils gebildeten Engstelle elastisch verformbar ist, so dass jeder Zahn selbst für sich beim Einstecken des Rohres nicht verformt wird, sondern um jeden der beiden benachbarten peripheren Verbindungsabschnitte schwenken kann. Diese Ausführung bedingt folglich eine bewegliche, d. h. ein bewußtes Bewegungsspiel gewährleistende Lagerung des Zahnringes in seinem äußeren Umfangsbereich. Diese Beweglichkeit führt aber zu dem Nachteil, dass das einzusteckende Rohr endseitig ziemlich genau rechtwinklig abgeschnitten sein muß, damit es beim Einstecken zu einer über den Umfang gleichmäßigen Verformung des Zahnrings kommt. Ein schräg abgeschnittenes Rohr könnte wegen des besagten Bewegungsspiels zu einem Verkanten des Zahnringes und somit zu Problemen beim Einstecken des Rohres führen.

Weiterhin beschreibt auch die EP 0 160 559 B1 eine ähnliche Rohrverbindung, bei der ebenfalls ein Zahn-bzw. Zackenring gerade auch in seinem äußeren Umfangsbereich beweglich gelagert ist.

Der Erfindung liegt die Aufgabe zugrunde, eine Rohr- Anschlußvorrichtung der genannten Art zu schaffen, die bei einfacher und preisgünstiger Ausgestaltung der ganzen, montierten Vorrichtung und auch ihrer Einzelteile, insbesondere des Halteelementes, eine gute und sichere Rohr-Halterung sowie verbesserte Steck- und Bedienungseigenschaften beim Einstecken und auch beim Lösen des Rohres gewährleistet.

Erfindungsgemäß wird dies durch die im kennzeichnenden Teil des Anspruchs 1 enthaltenen Merkmale erreicht.

Somit ist das Halteelement erfindungsgemäß gerade in seinem äußeren Umfangsbereich definiert gehalten, und zwar zumindest in axialer Richtung. In axialer Richtung tritt kein Spiel oder nur ein derart geringfügiges Spiel auf, dass im äußeren Umfangsbereich ein Verkippen des gesamten Halteelementes dadurch praktisch ausgeschlossen ist. Daher ist die erfindungsgemäße Anschlußvorrichtung vorteilhafterweise auch für schräg abgeschnittene Rohrenden geeignet, weil die Haltearme über das jeweilige Rohrende auch unabhängig voneinander, d. h. auch nacheinander bzw. jeweils unterschiedlich, verformbar sind, bis sie dann alle gleichermaßen gegen den Außenumfang des Rohres wirken. Es wird dann auch eine gut definierbare Haltefunktion erreicht. Zudem kann durch die axial im Wesentlichen spielfreie Halterung vorteilhafterweise auch ein sehr dünnes und daher kostengünstiges Material (Federstahlblech) für das Halteelement verwendet werden.

In radialer Richtung, d. h. quer zur Steckachse, ist ein radiales Bewegungsspiel (Schiebesitz) für das Halteelement derart vorgesehen, daß eine Selbstzentrierung des Halteelementes beim Einstecken des Rohres erreicht wird.

Weitere vorteilhafte Ausgestaltungsmerkmale der Erfindung sind in den Unteransprüche und in der folgenden Beschreibung enthalten.

Anhand von in der Zeichnung veranschaulichten, bevorzugten Ausführungsbeispielen soll die Erfindung genauer erläutert werden. Dabei zeigen:
- Fig. 1: einen Längsschnitt durch eine erste Ausführungsform einer erfindungsgemäßen Anschlußvorrichtung mit einem noch nicht eingesteckten Rohr,
- Fig. 2: eine vergrößerte Ansicht analog zu Fig. 1, jedoch im gesteckten Zustand des Rohres,
- Fig. 3: eine vergrößerte Detailansicht des Einsatzteils ebenfalls im Längsschnitt in einem Zustand vor der Montage,
- Fig. 4: eine vergrößerte Detailansicht des Halteelementes in einem Schnitt analog zu Fig. 1 (Radialschnitt IV-IV gemäß Fig. 5),
- Fig. 5: eine Draufsicht des Halteelementes in Pfeilrichtung V gemäß Fig. 4,
- Fig. 6 u. 7: eine zweite Ausführungsform der Anschlußvorrichtung wiederum im Längsschnitt, vor (Fig. 6) und nach (Fig. 7) dem Einstecken des Rohrs,
- Fig. 8 u. 9: Darstellungen analog zu Fig. 6 und 7 einer dritten nicht erfindungsgemäßen Variante, einer Anschlußvorrichtung,
- Fig. 10 u. 11: eine vierte nicht erfindungsgemäße Variante einer Auschlußvorrichtung in zu Fig. 6 und 7 analogen Darstellungen,
- Fig. 12 u. 13: eine weitere erfindungsgemäße Ausführungsvariante wiederum analog zu Fig. 6 und 7.

In den verschiedenen Figuren der Zeichnungen sind gleiche Teile stets mit den gleichen Bezugszeichen versehen und werden daher in der Regel auch jeweils nur einmal beschrieben.

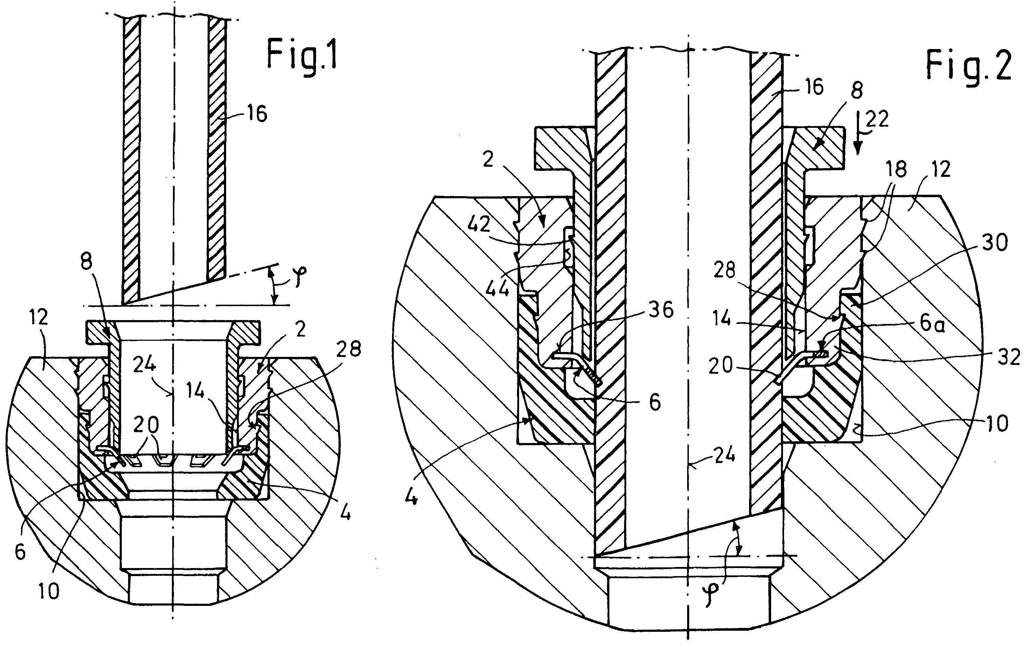

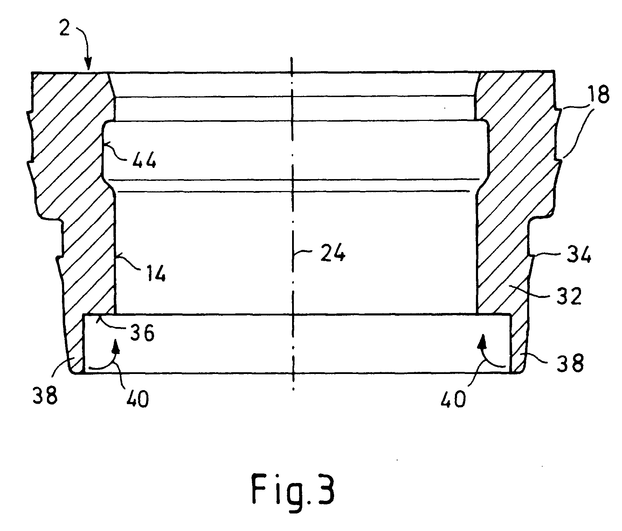

Wie sich zunächst aus Fig. 1 und 2 ergibt, weist eine erfindungsgemäße Anschlußvorrichtung ein hülsenartiges Einsatzteil 2, ein Dichtelement 4, ein Halteelement 6 sowie vorzugsweise eine Lösehülse 8 auf. Das Einsatzteil 2 bildet zusammen mit den übrigen Komponenten eine Einpreßpatrone (Cartridge), die in eine Anschlußöffnung 10 eines beliebigen Anschlußkörpers 12 einsetzbar bzw. einpreßbar ist. Der Anschlußkörper 12 kann von einem praktisch beliebigen Aggregateteil, z. B. einem Ventil, oder einem muffenartigen Gehäuseteil (Formteil) gebildet sein und besteht vorzugsweise aus einer Aluminiumlegierung oder einem faserverstärkten Kunststoff. Das hülsenartige Einsatzteil 2 umschließt eine Aufnahmeöffnung 14 für ein einzusteckendes Rohr 16 und weist auf seinem Außenumfang zur kraft- und/oder formschlüssigen Halterung in der Anschlußöffnung 10 des Anschlußkörpers 12 zahnartige Ringerhebungen 18 auf (siehe insbesondere Fig. 2 und 3).

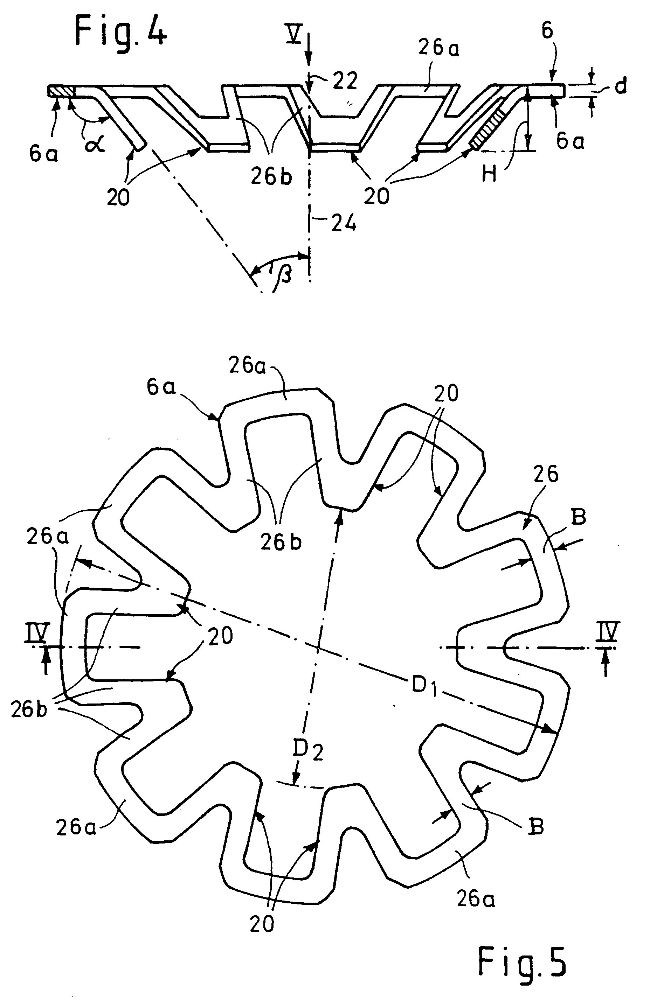

Das Dichtelement 4 dient zur Abdichtung zwischen dem Anschlußkörper 12 und dem Rohr 16. Dabei dichtet das Dichtelement 4 auch einerseits am Innenumfang das Rohr 16 gegen das Einsatzteil 2 und andererseits am Außenumfang das Einsatzteil 2 gegen die Anschlußöffnung 10 des Anschlußkörpers 12 ab. Das Halteelement 6 ist federelastisch und im wesentlichen ringförmig ausgebildet und weist radial nach innen in die Aufnahmeöffnung 14 ragende, über den Umfang verteilt angeordnete und widerhakenartig gegen den Außenumfang des Rohres 16 wirkende Haltearme 20 auf. Es wird hierzu insbesondere auf die vergrößerten Darstellungen in Fig. 4 und 5 verwiesen.

Die Lösehülse 8 ist bei dieser Ausführung ein integriertes Element und greift axial verschiebbar in einen Ringspalt zwischen dem Einsatzteil 2 und dem Rohr 16 derart ein, dass durch Einschieben der Lösehülse 8 in Pfeilrichtung 22 das Halteelement 6 zur Freigabe des Rohres 16 elastisch verformbar ist.

Erfindungsgemäß ist das Halteelement 6 mit einem äußeren Umfangsbereich 6a relativ zu dem Einsatzteil 2 axial, d. h. in Richtung einer Einsteckachse 24 des Rohres 16 gesehen, im Wesentlichen spielfrei gehalten. Daraus folgt, dass eine elastische Verformung beim Stecken bzw. Lösen des Rohres 16 zumindest hauptsächlich im Bereich der Haltearme 20 erfolgt. Das Halteelement 6 ist mit seinem äußeren Umfangsbereich 6a radial, d. h. quer zur Rohr- Einsteckachse 24 gesehen, derart mit Bewegungsspiel gehalten, dass beim Einstecken des Rohrs 16 eine selbsttätige Zentrierung des Halteelementes 6 bezüglich der Achse 24 erreicht wird.

Gemäß Fig. 4 und 5 ist das Halteelement 6 bevorzugt als Stanzbiegeteil aus Federstahlblech ausgebildet. Gemäß Fig. 4 liegt der axial praktisch spielfrei gehaltene Umfangsabschnitt 6a in einer radialen, sich senkrecht zur Einsteckachse 24 erstreckenden Ebene, während die Haltearme 20 schräg radial nach innen sowie in Einsteckrichtung (vgl. den Pfeil 22) des Rohres 16 verlaufen. Somit geht der äußere Umfangsabschnitt 6a über einen stumpfen Winkel α von insbesondere etwa 130 ° in die Haltearme 20 über. Die Haltearme 20 ihrerseits schließen folglich mit der Einsteckachse 24 einen spitzen Winkel β von insbesondere etwa 40° ein.

Wie sich weiterhin aus Fig. 5 ergibt, besteht das Halteelement 6 in der bevorzugten Ausführung aus einem Blechstreifen 26, der in Umfangsrichtung und radial derart zickzackförmig verläuft, dass der spielfrei gehaltene Umfangsabschnitt 6a aus mehreren Kreisbogenabschnitten 26a besteht und jeweils benachbarte Kreisbogenabschnitte 26a über V-oder U-förmig verlaufende, die Haltearme 20 bildende Radialabschnitte 26b verbunden sind. Aus dieser Ausführung resultiert folglich ein mäanderartiger Zackenring.

Es ist weiterhin bevorzugt vorgesehen, dass das Dichtelement 4 als Formring (Profilring) aus einem elastischen Material ausgebildet und vorzugsweise über eine Kraft- und/oder Formschlußverbindung 28 an dem Einsatzteil 2 fixiert ist. Wie dargestellt, weist dazu das Dichtelement 4 einen äußeren Ringbund 30 auf, der auf einen zylindrischen Abschnitt 32 des Einsatzteils 2 aufgesteckt ("aufgeknüpft") ist. Die Kraft- und/oder Formschlußverbindung 28 wird bevorzugt durch mindestens eine umlaufende zahnartige Erhebung 34 (Fig. 3) des zylindrischen Abschnittes 32 des Einsatzteils 2 gebildet.

Bei den Ausführungsformen gemäß Fig. 1 und 2, Fig. 6 und 7 sowie Fig. 12 und 13 ist vorgesehen, dass der äußere Umfangsbereich 6a des Halteelementes 6 in einer inneren, radialen Ringnut 36 des Einsatzteils 2 gehalten ist (Fig. 2). Diese innere Ringnut 36 wird durch Umbördeln eines zunächst hohlzylindrischen Endabschnittes 38 (Fig. 3) des aus einem bördelfähigen Material, insbesondere Messing, bestehenden Einsatzteils 2 gebildet, indem der Endabschnitt 38 unter Einschluß des Umfangsbereichs 6a des zuvor eingesetzten Halteelementes 6 in Richtung der in Fig. 3 eingezeichneten Pfeile 40 nach innen umgebördelt wird. Dabei kann - je nach den Verformungseigenschaften des Materials beim Umbördeln - durch ein geringfügiges Zurückfedern ein sehr geringes axiales Spiel im Umfangsbereich 6a auftreten, wobei aber dieses Spiel für die erfindungsgemäße Verformungskinematik des Halteelementes eigentlich keine Rolle spielt.

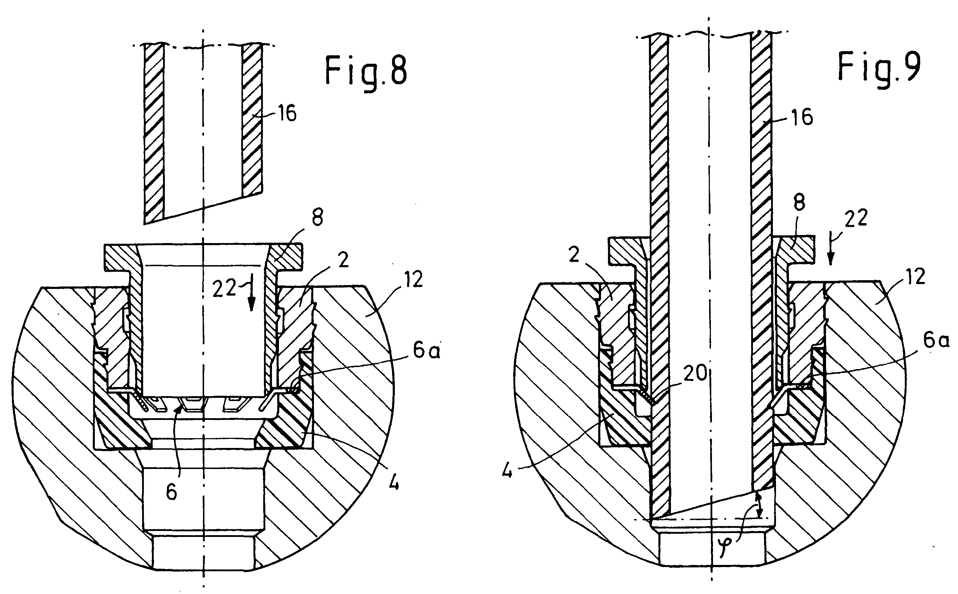

Bei der in Fig. 8 und 9 dargestellten nicht erfindungsgemäßen, Variante ist der Umfangsbereich 6a des Halteelementes 6 durch zumindest axiale (stirnseitige) Anlage zwischen dem Einsatzteil 2 und dem Dichtelement 4 gehalten. Dadurch wird axial eine echte Spielfreiheit erreicht. Der Umfangsbereich 6a kann dabei auch - in Abweichung von der Darstellung - in einer stirnseitigen Vertiefung des Einsatzteils 2 liegen und darin durch bloße Anlage des Dichtelementes 4 gehalten werden.

Bei den Ausführungen gemäß Fig. 1, 2 und 6 bis 11 ist die Lösehülse 8 vorteilhafterweise mit den übrigen Teilen zu einer Baueinheit verbunden. Dazu ist die Lösehülse 8 vorzugsweise umfangsgemäß geschlossen, d. H. ungeschlitzt, und bevorzugt in das Einsatzteil 2 derart eingerastet, dass sie zwar in axialer Richtung verschiebbar ist, jedoch gegen unbeabsichtigtes Lösen bzw. Herausziehen gesichert wird. Wie dargestellt, greift dazu die Lösehülse 8 mit einem äußeren Ansatz 42 in eine inneren Ausnehmung 44 des Einsatzteils 2 ein. Somit sind dann alle Einzelteile 2, 4, 6 und 8 miteinander zu einer Baueinheit verbunden, die nach Vormontage lediglich in die Anschlußöffnung 10 des Aggregateteils 12 eingesetzt bzw. eingepreßt zu werden braucht. Diese Baueinheit ist insbesondere auch für automatisierte Einpreßvorgänge geeignet.

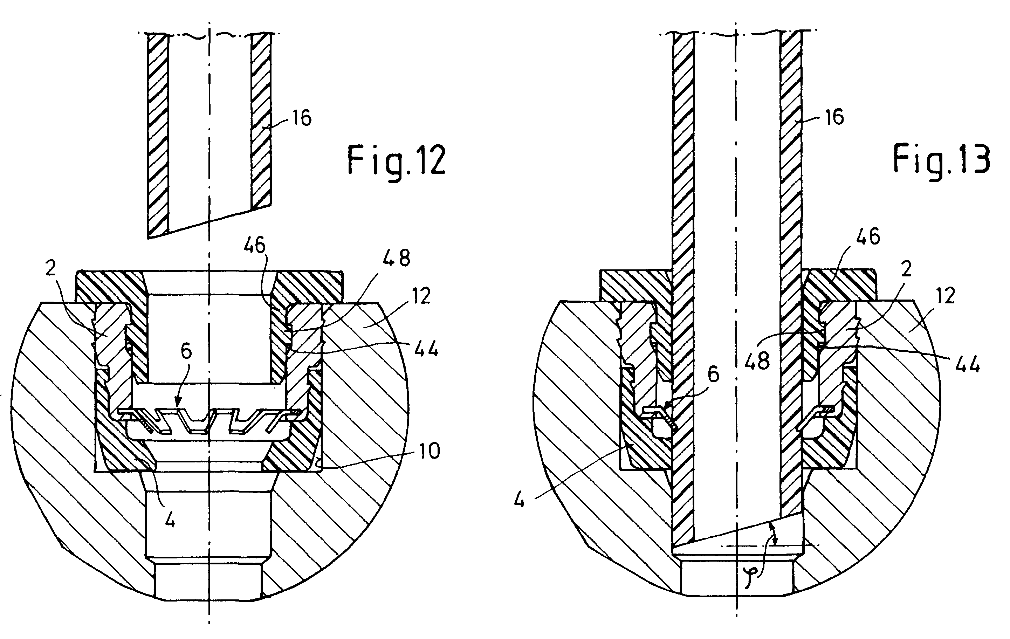

Bei der in Fig. 12 und 13 dargestellten Ausführung ist eine integrierte Lösehülse nicht vorgesehen, allerdings kann trotzdem eine Lösbarkeit des Rohrs 16 erreicht werden. Dazu kann eine nicht dargestellte Lösehülse als Werkzeug verwendet werden. Diese Lösehülse ist dann an einer Umfangsstelle axial und radial durchgehend geschlitzt und dadurch so elastisch spreizbar, dass sie quer auf das Rohr 16 aufgesetzt und dann axial analog zu der Lösehülse 8 in Pfeilrichtung 22 (vgl. Fig. 2) gegen das Halteelement 6 bewegt werden kann. Bei dieser Ausführung ohne integrierte Lösehülse ist es zweckmäßig, ein elastomeres Formteil 46 so in den Ringspalt zwischen dem Einsatzteil 2 und dem Rohr 16 einzusetzen, dass ein Schutz gegen Eindringen von Schmutz und dergleichen gewährleistet ist. Das Formteil 46 kann zur Fixierung mit einem äußeren Ansatz 48 rastend in die schon erwähnte Ausnehmung 44 des Einsatzteils 2 eingreifen.

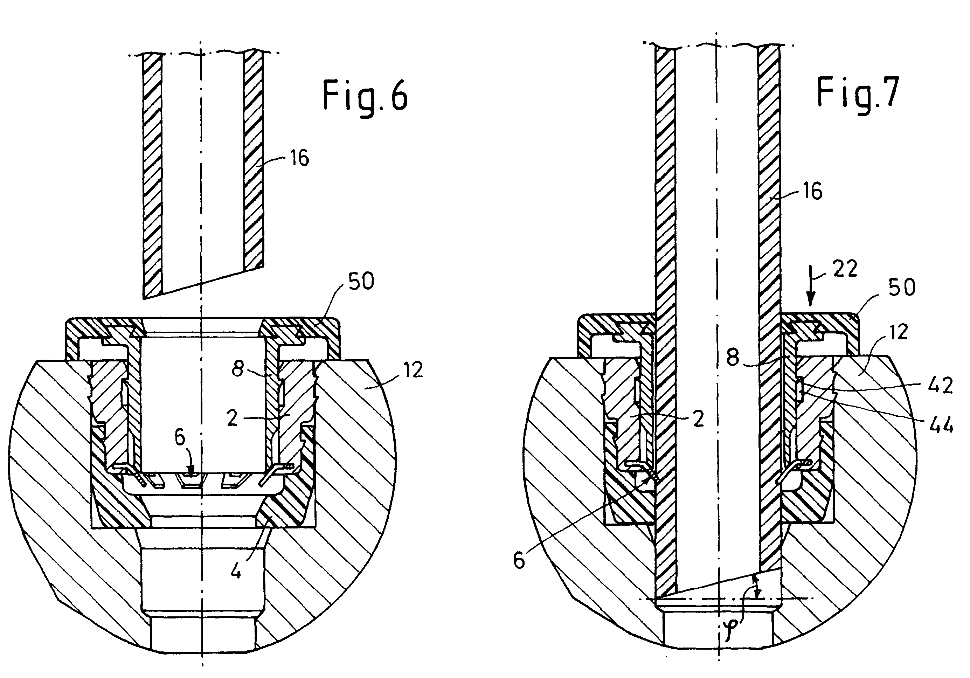

Gemäß Fig. 6 und 7 ist noch eine zusätzliche, kappenartige Abdeckung 50 vorgesehen, die als Schmutzdichtung den das Rohr 16 umschließenden Bereich des Anschlußkörpers 12 überdeckt. Die insbesondere aus einem elastomeren Material bestehende Abdeckung 50 kann über beispielsweise schwalbenschwanzartige Verbindungen kraft- und/oder formschlüssig mit der Lösehülse 8 verbunden sein, deren Lösebewegung (Pfeil 22) dann durch die Elastizität der Abdeckung 50 möglich ist.

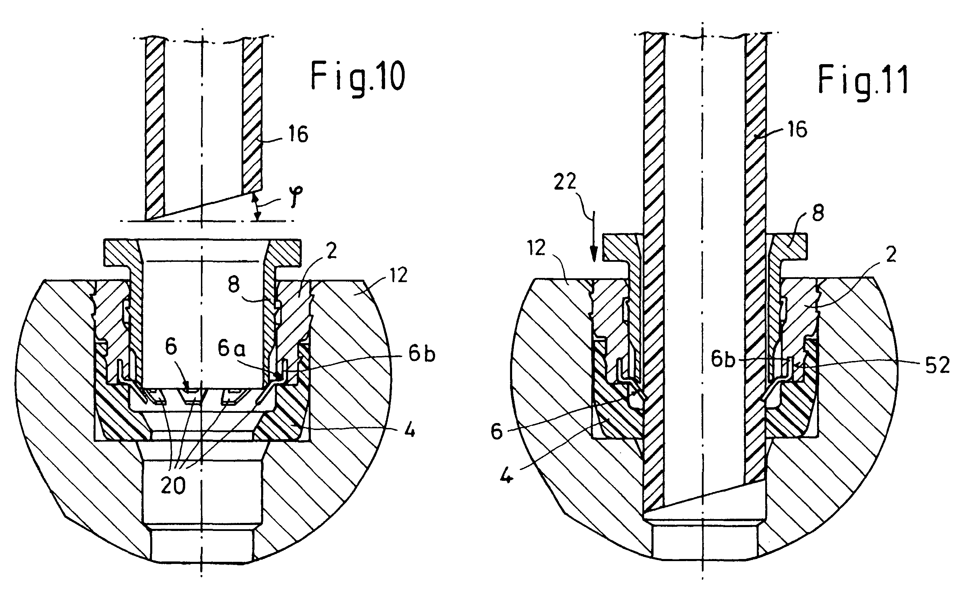

Bei der nicht erfindungsgemäßen Ausführungsvariante nach Fig. 10 und 11 greift das Halteelement 6 mit äußeren, axial umgebogenen Steckabschnitten 6b des äußeren Umfangsbereichs 6a in eine axiale Ringnut 52 des Einsatzteils 2 ein. In diesem Fall ist dadurch das Halteelement 6 auch in radialer Richtung im Wesentlichen spielfrei fixiert.

Aufgrund der beschriebenen erfindungsgemäßen Ausgestaltung können vorteilhafterweise auch Rohre 16 problemlos eingesteckt werden, die endseitig in einem bestimmten Winkel ϕ schräg abgeschnitten sind. Dieser Winkel ϕ kann vorteilhafterweise bis zu mindestens 15° betragen, je nach Bohrung aber sogar bis zu 30°.

Bevorzugte Einsatzgebiete für die erfindungsgemäße Anschlußvorrichtung sind beispielsweise Druckluft(neben)verbraucherkreise in Kraftfahrzeugen (Pkw/Lkw) mit einem Betriebsdruck bis 12 bar.

Das Halteelement 6 ist durch seine filigrane Ausbildung sehr preiswert, wobei dennoch eine gute Haltefunktion durch die erfindungsgemäße, axial spielfreie Fixierung des äußeren Umfangsabschnittes 6a gewährleistet ist. Dazu ist auch die beschriebene Ausgestaltung (Form- und Ausrichtung) der Haltearme 20 von Vorteil.

In einer konkret realisierten, für Rohre mit einem Außendurchmesser von etwa 4 mm (z.B. PA-Rohr 4 x 1) konzipierten Ausführung hat das Halteelement 6 beispielsweise folgende Abmessungen (vgl. dazu Fig. 4 und 5):
Außendurchmesser D1: ca. 6,8 mm
Innendurchmesser D2 im inneren Endbereich der Haltearme 20: ca 2,9 mm
Dicke d des Federstahlbleches: ca. 0,2 mm
Breite B des Blechstreifens 26: ca.0,4 mm
Anzahl der Haltearme 20: beispielsweise 9, daraus resultierender Winkelabstand 40°
Gesamthöhe H (axial): ca. 1,1 mm.

Dabei wird die Steifigkeit der Haltearme 20 - und damit auch die insgesamt erreichte Haltekraft - hauptsächlich von der Breite B im Bereich der Haltearme 20 bzw. der Raidalabschnitte 26b des Blechstreifenmaterials bestimmt.

Die Erfindung ist jedoch nicht auf die dargestellten und beschriebenen Ausführungsbeispiele beschränkt, sondern umfaßt auch alle im Sinne der Erfindung gleichwirkenden Ausführungen, die im Schutzumfang der Ansprüche liegen.

## Patentansprüche

1. Anschlussvorrichtung für Druckmittel-Rohre, mit einem hülsenartigen, kraftund/oder formschlüssig in eine Anschlussöffnung (10) eines Anschlusskörpers (12) einsetzbaren und eine Aufnahmeöffnung (14) für ein einzusteckendes Rohr (16) umschließenden Einsatzteil (2), einem Dichtelement (4) zur Abdichtung zwischen dem Anschlusskörper (12) und dem Rohr (16) sowie mit einem federelastischen, im wesentlichen ringförmigen Halteelement (6) mit sich radial nach innen in die Aufnahmeöffnung (14) erstreckenden, über den Umfang verteilten und widerhakenartig gegen den Außenumfang des Rohres (16) wirkenden Haltearmen (20), wobei das Halteelement (6) mit einem äußeren Umfangsbereich (6a) in einer inneren Ringnut (36) des Einsatzteils (2) relativ zu diesem axial, in Richtung einer Einsteckachse (24) des Rohres (16) gesehen im Wesentlichen spielfrei gehalten ist, so dass eine elastische Verformung beim Stecken bzw. Lösen des Rohres (16) im Bereich der Haltearme (20) erfolgt,
**dadurch gekennzeichnet, dass** die den äußeren Umfangsbereich (6a) des Halteelementes (6) aufnehmende, innere, radiale Ringnut (36) des Einsatzteils (2) durch Umbördeln eines zunächst hohlzylindrischen Endabschnittes (38) des aus einem bördelfähigen Material bestehenden Einsatzteils (2) unter Einschluß des Umfangsbereichs (6a) des zuvor eingesetzten Halteelementes (6) derart gebildet ist, dass das Halteelement (6) mit dem äußeren Umfangsbereich (6a) radial, quer zur Rohr-Einsteckachse (24) so verschiebbar gehalten ist, dass beim Steckvorgang eine Selbstzentrierung erreicht wird.

2. Anschlussvorrichtung nach Anspruch 1,
**dadurch gekennzeichnet, dass** das Einsatzteil (2) aus einem bördelfähigen Messing besteht.

3. Anschlussvorrichtung nach Anspruch 1 oder 2,
**gekennzeichnet durch**
eine derart verschiebbar in das Einsatzteil (2) eingreifende Lösehülse (8), dass **durch** Einschieben der Lösehülse (8) das Halteelement (6) zur Freigabe des Rohres (16) elastisch verformbar ist.

4. Anschlussvorrichtung nach einem der Ansprüche 1 bis 3,
**dadurch gekennzeichnet, dass**
das Halteelement (6) als Stanzbiegeteil aus Federstahlblech ausgebildet ist.

5. Anschlussvorrichtung nach einem der Ansprüche 1 bis 4,
**dadurch gekennzeichnet, dass**
der axial spielfrei und radial verschiebbar gehaltene Umfangsabschnitt (6a) des Halteelementes (6) in einer radialen, sich senkrecht zur Einsteckachse (24) erstreckenden Ebene liegt.

6. Anschlussvorrichtung nach einem der Ansprüche 1 bis 5,
**dadurch gekennzeichnet,dass**
die sich radial nach innen erstreckenden Haltearme (20) schräg in Einsteckrichtung (22) des Rohres (16) verlaufen.

7. Anschlussvonichtung nach einem der Ansprüche 1 bis 6,
**dadurch gekennzeichnet, dass**
das Halteelement (6) aus einem Blechstreifen (26) besteht, der in Umfangsrichtung und radial derart zickzackförmig verläuft, dass der axial spielfrei gehaltene Umfangsabschnitt (6a) aus mehreren Kreisbogenabschnitten (26a) besteht und jeweils benachbarte Kreisbogenabschnitte (26a) über V- oder U-förmig verlaufende, die Haltearme (20) bildende Radialabschnitte (26b) verbunden sind.

8. Anschlussvonichtung nach einem der Ansprüche 1 bis 7,
**dadurch gekennzeichnet, dass**
das Dichtelement (4) als Formring aus einem elastischen Material ausgebildet und vorzugsweise über eine Kraft- und/oder Formschlußverbindung (28) an dem Einsatzteil (2) fixiert ist.

9. Anschlussvorrichtung nach einem der Ansprüche 3 bis 8,
**dadurch gekennzeichnet, dass**
die Lösehülse (8) als integraler Vorrichtungsbestandteil in das Einsatzteil (2) eingerastet ist.

10. Anschlussvorrichtung nach einem der Ansprüche 1 bis 9,
**gekennzeichnet durch** eine als Schmutzdichtung den Steckbereich des Anschlusskörpers (12) überdeckende Schutzkappe (50), die vorzugsweise an der Lösehülse (8) gehalten ist.

11. Anschlussvorrichtung nach einem der Ansprüche 3 bis 8,
**dadurch gekennzeichnet, dass** die Lösehülse als separates Lösewerkzeug ansetzbar und entfernbar ist, wobei die Lösehülse an einer Umfangsstelle radial und axial durchgehend geschlitzt und dadurch spreizbar ist.

12. Anschlussvorrichtung nach Anspruch 11,
**gekennzeichnet durch** ein elastisches, hülsenförmiges Formteil (46), das bei entfernter Lösehülse als Schmutzdichtung in den Ringspalt zwischen dem Rohr (16) und dem Einsatzteil (2) eingreift.

## Claims

1. Connection device for pressure-medium pipes, having a sleeve-like insert part (2), which can be inserted into a connection opening (10) of a connection body (12) in a frictional and/or positive-locking manner and encloses a locating opening (14) for a pipe (16) to be inserted, having a sealing element (4) for providing a seal between the connection body (12) and the pipe (16), and having an elastic, essentially annular retaining element (6) with retaining arms (20) which extend radially inwards into the locating opening (14), are distributed over the circumference and act in a barb-like manner against the outer circumference of the pipe (16), the retaining element (6), with an outer circumferential region (6a), being held essentially free of play in an inner annular groove (36) of the insert part (2) axially relative to the latter as viewed in the direction of an insertion axis (24) of the pipe (16), so that an elastic deformation is effected in the region of the retaining arms (20) during the insertion or release of the pipe (16), **characterized in that** the inner, radial annular groove (36), locating the outer circumferential region (6a) of the retaining element (6), of the insert part (2), while enclosing the circumferential region (6a) of the retaining element (6) inserted beforehand, is formed by flanging an end section (38), which is hollow-cylindrical to begin with, of the insert part (2), which is made of a material capable of being flanged, in such a way that the retaining element (6), with the outer circumferential region (6a), is held in a radially displaceable manner transversely to the pipe insertion axis (24) in such a way that self-centring is achieved during the insertion operation.

2. Connection device according to Claim 1, **characterized in that** the insert part (2) is made of a brass capable of being flanged.

3. Connection device according to Claim 1 or 2, **characterized by** a release sleeve (8) displaceably engaging in the insert part (2) in such a way that, by the release sleeve (8) being pushed in, the retaining element (6) can be elastically deformed for releasing the pipe (16).

4. Connection device according to one of Claims 1 to 3, **characterized in that** the retaining element (6) is designed as a stamped and bent part of spring steel sheet.

5. Connection device according to one of Claims 1 to 4, **characterized in that** the circumferential section (6a), held axially free of play and in a radially displaceable manner, of the retaining element (6) lies in a radial plane extending perpendicularly to the insertion axis (24).

6. Connection device according to one of Claims 1 to 5, **characterized in that** the retaining arms (20) extending radially inwards run obliquely in the insertion direction (22) of the pipe (16).

7. Connection device according to one of Claims 1 to 6, **characterized in that** the retaining element (6) consists of a sheet-metal strip (26) which runs in a zigzag shape in the circumferential direction and radially in such a way that the circumferential section (6a) held axially free of play consists of a plurality of circular arc sections (26a), and in each case adjacent circular arc sections (26a) are connected via radial sections (26b) running in a V or U shape and forming the retaining arms (20).

8. Connection device according to one of Claims 1 to 7, **characterized in that** the sealing ring (4) is designed as a shaped ring of an elastic material and is preferably fixed to the insert part (2) via a frictional and/or positive-locking connection (28)-.

9. Connection device according to one of Claims 3 to 8, **characterized in that** the release sleeve (8), as an integral part of the device, latches in place in the insert part (2).

10. Connection device according to one of Claims 1 to 9, **characterized by** a protective cap (50) which as dirt seal covers the insertion region of the connection body (12) and is preferably held on the release sleeve (8).

11. Connection device according to one of Claims 3 to 8, **characterized in that** the release sleeve can be attached and removed as a separate release tool, the release sleeve being continuously split radially and axially at a circumferential point and thereby being capable of being expanded.

12. Connection device according to Claim 11, **characterized by** an elastic, sleeve-like shaped part (46) which, when the release sleeve is removed, engages as a dirt seal in the annular gap between the pipe (16) and the insert part (2).

## Revendications

1. Dispositif de raccord pour tubes de fluide sous pression, comprenant un élément rapporté (2) en forme de douille, qui peut être inséré en formant une liaison par action de force et/ou par sûreté de forme dans une ouverture de raccord (10) d'un corps de raccord (12) et qui entoure une ouverture de réception (14) pour un tube à emmancher (16), un élément d'étanchéité (4) destiné à établir un joint étanche entre le corps de raccord (12) et le tube (16), ainsi qu'un élément de retenue (6) élastique à la façon d'un ressort, sensiblement annulaire, présentant des bras de retenue (20) qui s'étendent radialement vers l'intérieur en s'engageant dans l'ouverture de réception (14), répartis sur la périphérie et qui agissent à la façon de crochets d'arrêt sur la périphérie extérieure du tube (16), l'élément de retenue (6) étant tenu par une région périphérique extérieure (6a) dans une gorge annulaire intérieure (36) de l'élément rapporté (2), axialement par rapport à cet élément, vu selon la direction d'un axe d'emmanchement (24) du tube (16), et sensiblement sans jeu, de sorte qu'il se produit une déformation élastique dans la région des bras de retenue (20) lors de l'emmanchement ou de la séparation du tube (16),
**caractérisé en ce que** la gorge annulaire intérieure radiale (36) de l'élément rapporté (2) qui reçoit la région périphérique extérieure (6a) de l'élément de retenue (6) est formée par sertissage d'un segment terminal (38), initialement cylindrique creux, de l'élément rapporté (2) composé d'une matière pouvant être sertie, en enfermant la région périphérique (6a) de l'élément de retenue (6) préalablement mis en place, de telle manière que l'élément de retenue (6) soit tenu mobile en déplacement radial, transversalement à l'axe d'emmanchement du tube (24), par sa région périphérique extérieure (6a), de telle manière qu'on obtienne un auto-centrage lors du processus d'emmanchement.

2. Dispositif de raccord selon la revendication 1,
**caractérisé en ce que** l'élément rapporté (2) est composé d'un laiton pouvant être serti.

3. Dispositif de raccord selon la revendication 1 ou 2,
**caractérisé par** une douille de désaccouplement (8) qui est engagée mobile en translation dans l'élément rapporté (2) de manière que l'élément de retenue (6) puisse se déformer élastiquement pour libérer le tube (16) sous l'effet de l'enfoncement de la douille de désaccouplement (8).

4. Dispositif de raccord selon une des revendications 1 à 3,
**caractérisé en ce que** l'élément de retenue (6) est constitué par une pièce découpée-pliée en tôle d'acier à ressorts.

5. Dispositif de raccord selon une des revendications 1 à 4,
**caractérisé en ce que** le segment périphérique (6a) de l'élément de retenue (6) tenu sans jeu dans la direction axiale mais mobile en translation dans la direction radiale, se trouve dans un plan radial qui s'étend perpendiculairement à l'axe d'emmanchement (24).

6. Dispositif de raccord selon une des revendications 1 à 5,
**caractérisé en ce que** les bras de retenue (20) qui s'étendent radialement vers l'intérieur sont orientés obliquement dans la direction d'emmanchement (22) du tube (16).

7. Dispositif de raccord selon une des revendications 1 à 6,
**caractérisé en ce que** l'élément de retenue (6) est composé d'une bande de tôle (26) qui s'étend dans la direction périphérique et radialement en zigzag, de telle manière que le segment périphérique (6a) tenu sans jeu dans la direction axiale soit composé de plusieurs segments d'arc de cercle (26a) et que les segments d'arc de cercle adjacents (26a) soient reliés par des segments radiaux (26b) s'étendant en forme de V ou de U, qui forment les bras de retenue (20).

8. Dispositif de raccord selon une des revendications 1 à 7,
**caractérisé en ce que** l'élément d'étanchéité (4) est constitué par une bague de forme en matière élastique et est de préférence fixé à l'élément rapporté (2) par une liaison opérant par action de force et/ou par complémentarité de forme (28).

9. Dispositif de raccord selon une des revendications 3 à 8,
**caractérisé en ce que** la douille de désaccouplement (8) est encliquetée dans l'élément rapporté (2) pour former une partie intégrante du dispositif.

10. Dispositif de raccord selon une des revendications 1 à 9,
**caractérisé par** un capuchon de protection (50) qui recouvre la région d'emmanchement du corps de raccord (12) pour former un cache-poussière.

11. Dispositif de raccord selon une des revendications 3 à 8,
**caractérisé en ce que** la douille de désaccouplement peut être mise en place et enlevée en constituant un outil de désaccouplement séparé, la douille de désaccouplement étant fendue en un point de sa périphérie en formant une fente continue radialement et axialement et pouvant ainsi être élargie.

12. Dispositif de raccord selon la revendication 11,
**caractérisé par** une pièce de forme élastique en forme de douille (46) qui s'engage dans la fente annulaire entre le tube (16) et l'élément rapporté (2) pour former un cache-poussière lorsque la douille de désaccouplement est enlevée.
